Europäisches Patentamt

European Patent Office

Office européen des brevets

(11) Publication number: **0 085 532**

**A1**

# (12) EUROPEAN PATENT APPLICATION

(21) Application number: **83300383.3**

(22) Date of filing: **26.01.83**

(51) Int. Cl.³: **F 16 K 17/04**
**B 60 K 41/04, F 16 H 5/18**

(30) Priority: **28.01.82 GB 8202493**

(43) Date of publication of application:
**10.08.83 Bulletin 83/32**

(84) Designated Contracting States:
**DE FR GB SE**

(71) Applicant: **Laycock Engineering Limited**
**Archer Road**
**Millhouses Sheffield S8 0JY(GB)**

(72) Inventor: **Ward, Edmund Frederick**
**11 Blackbrook Road**
**Lodge Moor Sheffield S10 4LP(GB)**

(74) Representative: **Dodd, Graham Marshall et al,**
**Guest Keen & Nettlefolds Plc. Group Patents and**
**Licensing Department PO Box 55 Cranford Street**
**Smethwick Warley West Midlands B66 2RZ(GB)**

(54) Overdrive unit and valve therefor.

(57) The invention provides a valve suitable for use in an overdrive unit, to control the rate of build-up and decay of fluid pressure in piston and cylinder mechanisms which move a clutch member of the overdrive between engaged and disengaged positions. The valve comprises a body (10) with a valve member (20) moveable to control communication between an inlet passage (15) and an outlet passage (22), and a piston (24) which is moveable between limiting positions under fluid pressure. A spring (28) is interposed between the piston (24) and valve member (20), which spring becomes loaded during movement of the piston whilst causing a relatively small increase in load on the valve member (20) and thus a period during which pressure in passage (15) increases gradually, thus providing a smooth shift as the overdrive engages. A second spring (34) operates between the piston (24) and valve member (20) when the piston has reached the limit of its travel, and a third spring (30) provides a residual load on the valve member (20) when the piston is in its starting position.

FIG 2

P.82.003/GMD

Overdrive Unit and Valve therefor

This invention relates to a valve suitable for use in controlling the operation of an overdrive unit of a motor vehicle.

A known form of overdrive unit, which is commonly fitted in addition to a conventional gearbox of a motor vehicle, makes use of an epicyclic gearing connected between the input and output shafts of the overdrive unit. A cone clutch within the overdrive unit is movable axially, either to lock the epicyclic gearing and provide direct drive through the unit, or to hold the sun wheel of the epicyclic gearing stationary and provide an overdrive ratio between the input and output shafts. The cone clutch is biased by springs towards its position in which it locks the epicyclic gearing to provide direct drive, and is movable to its other, overdrive engaged, position by hydraulic piston and cylinder assemblies supplied with oil under pressure from a pump incorporated in the unit. The piston cylinder assemblies are connected to the output of oil from the pump, and are upstream of a mechanical valve which controls the pressure of the oil in the pump output line. To engage the overdrive, the mechanical valve restricts flow of oil from the pump output line, thus raising the pressure of such oil and operating the pistons to move the cone clutch, and to disengage the overdrive the mechanical valve allows the pressure in the pump output line to be relieved and permit the springs to return the cone clutch to its overdrive disengaged position. The mechanical valve is itself controlled by delivery of oil from the pump output line by a solenoid valve.

For an overdrive unit to provide acceptably smooth operation, in the sense that shifts between the engaged and disengaged condition must not be excessively jerky, the rate at which oil pressure is allowed to build up and decay in the pump output line must be carefully controlled. This is the function of the mechanical valve, since the solenoid valve effectively provides a sudden on-off action. In particular, it may be desirable in certain circumstances for the characteristics of oil pressure rise or decay in the pump output line to include an intermediate part in which the pressure remains at a more or less constant value between its highest and lowest values for a short time.

It is the object of the present invention to provide a construction of valve which enables this characteristic to be achieved.

According to the invention, we provide a valve for controlling release of fluid from a passage to determine the pressure of fluid therein, comprising a valve body, a valve member moveable within the said body to obstruct communication between said passage and an outlet passage, a piston moveable within said body between a first position and a second position therein, under the influence of fluid under pressure introduced into said body, and first spring means operative between said piston and said valve member, said first spring means becoming loaded during movement of said piston from said first position to said second position thereof and causing a relatively small increase in load on said valve member during said piston movement.

Thus, by selection of the characteristics of the first spring means such that during movement of the piston only a relatively small increase in load on the valve member occurs, the more or less constant fluid pressure (in practice increasing but at a slow rate) in the passage is achieved, enabling a smooth overdrive shift to be obtained.

The valve may include a second spring means which is operative between the piston and valve member when the piston is in its second position, which second spring means determines the highest value of fluid pressure which can be maintained in the passage. This pressure in the system is that obtaining when the overdrive unit with which the valve is to be used is in the engaged condition. The second spring means may be disposed between a surface on the valve member and an abutment, the abutment being contacted by the piston when the piston is at or closely approaches its second position.

The valve may further include third spring means which is operative on the valve member to establish a residual pressure in the passage, for when the overdrive is in its disengaged condition.

The invention also provides an overdrive unit incorporating a valve as above set forth.

The invention will now be described by way of example with reference to the accompanying drawings, of which

Figure 1 is a diagram of the fluid system of an overdrive unit, incorporating a valve according to the invention.

Figures 2, 3, 4 and 5 are all cross sections through a valve according to the invention, at successive stages of operation thereof.

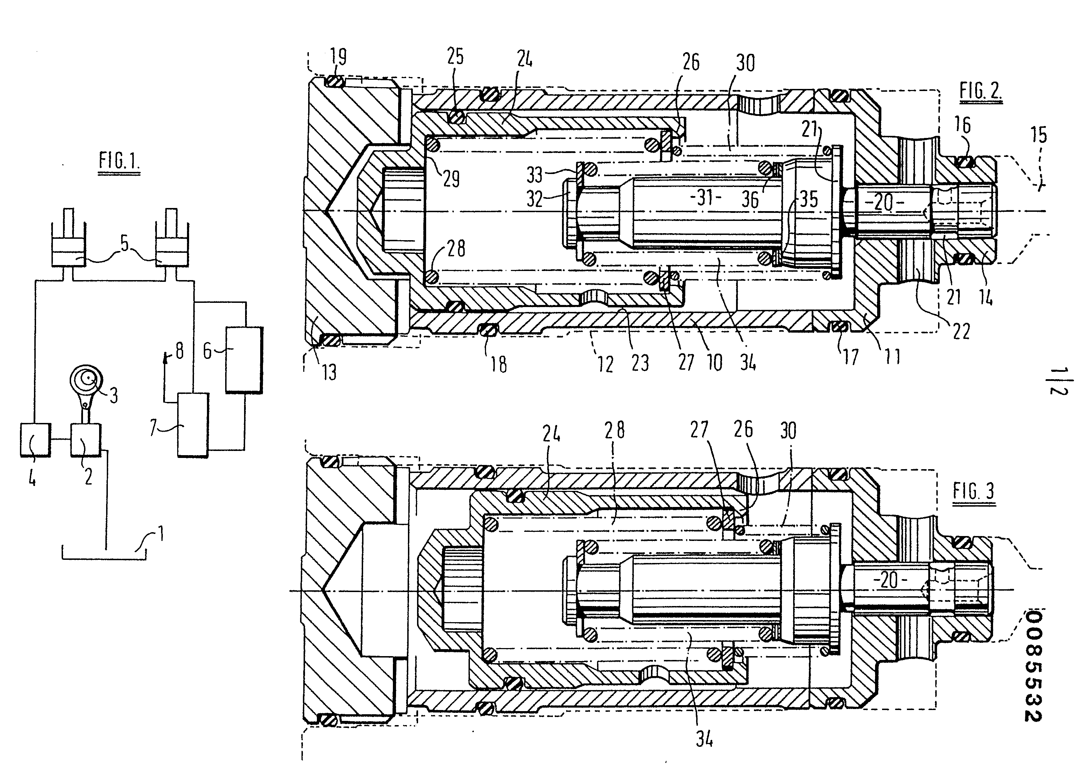

Referring firstly to Figure 1 of the drawings, this shows diagramtically the fluid circuit of an overdrive unit of known type. The unit contains a quantity of oil which is drawn from a sump 1 by a plunger pump 2 operated from an eccentric 3 associated with the input shaft of the unit.

From the pump 2, oil is delivered under pressure by way of a filter 4 to two piston and cylinder units 5 and thence to a valve 7. Valve 7 controls the fluid pressure of the oil in the line including the piston and cylinder units 5, by obstructing flow of oil to an outlet 8 which supplies oil for lubrication purposes to the operating parts the over drive unit, from where it returns to the sump 1. When the pressure in the line upstream of valve 7 is allowed to increase, the piston cylinder units 5 are operated to engage the overdrive. Valve 7 is a mechanical valve, operation of which is initiated by fluid pressure applied to an operating piston thereof, as described hereafter, under the control of a solenoid valve 6 which may be controlled by the vehicle's driver.

Referring now to Figure 2 of the drawings, the valve 7 comprises a body 10 with a separate end portion 11, and these are held in a bore 12 formed in the main casing or housing of an overdrive unit by a screwed in plug 13. The end portion 11 of the valve terminates in a spigot 14 which fits within an enlarged end portion of an oil passage 15 in the casing of the overdrive unit, and is sealed therein by an O-ring 16. There are further O-rings 17, 18 which seal the valve body 10 in the overdrive casing, and an O-ring 19 which seals the plug 13.

The oil passage 15 communicates with the output line from the pump of the overdrive unit, and with the piston and cylinder assemblies 5 which move the cone clutch of the unit against its biasing springs to engage the overdrive. Hence, if passage 15 is restricted so that oil cannot readily escape from it, the pressure in such passage will rise and cause the overdrive to be engaged.

Within a bore extending axially through the part 11 of the valve, there is a relief valve piston 20. This piston has an external annular groove 21 communicating by way of internal orifices with the passage 15. Within the valve body 10, the piston 20 has a flange 21 which determines the extent to which the piston 20 can move to the right. In its limit position in this direction, the outlet from passage 15 is completely blocked off, but as the piston 20 moves to the left the annular groove 21 provides a progressively increasing area of passageway communicating with a bore 22 extending across the spigot 14. From bore 22, oil can flow freely back to the reserve of oil contained in the casing of the overdrive unit, in practice by way of passages 8 which distribute such oil to the working parts thereof for lubrication purposes.

The body 10 of the valve affords an internal cylindrical surface 23 within which is slidable a cup-shaped dashpot piston 24 sealed by an O-ring 25. At its open end, the dashpot piston 24 terminates in an inwardly directed flange 26, which provides an abutment for a ring 27. A spring 28 is disposed between an abutment surface 29, within the head of piston 24, and the ring 27. A further spring 30 is disposed between the flange 21 and the other side of ring 27.

Beyond flange 21, the relief valve piston 20 extends within the valve body 10 as an extension 31. This terminates in a head 32 which provides an abutment for a circlip 33, which itself provides an abutment for a main spring 34. The other end of main spring 34 seats against a shoulder 35, with the intermediary of packing shims 36.

The operation of the valve is as follows. It will be assumed that initially the various parts thereof are in the positions shown in Figure 2, in which the overdrive is not engaged. The piston 24 is in its limiting position to the furthest left of the drawing. If the overdrive unit is operating, oil is being allowed to escape from passage 15 by way of the drillings and annular groove in piston 20 to the bore 22, the piston 20 having been displaced to the left against the action of spring 30 so as to provide for a residual, relatively low, oil pressure in the output line of the oil pump communicating with passage 15.

If now it is desired to engage the overdrive unit, the solenoid valve 6 will be actuated to permit oil to be delivered from passageway 15 to the space to the left of piston 24 through a passage which is not illustrated. This passage contains a restrictor orifice, to limit the rate at which oil can be delivered to the space to the left of piston 24.

As oil is thus delivered to piston 24, this piston commences to move to the right. Spring 30, which determines the residual oil pressure in passage 15 and which is relatively weak, is compressed by this movement, causing a slight rise in oil pressure in passage 15. Eventually, spring 30 becomes compressed solid, and this condition is shown in Figure 3 of the drawings.

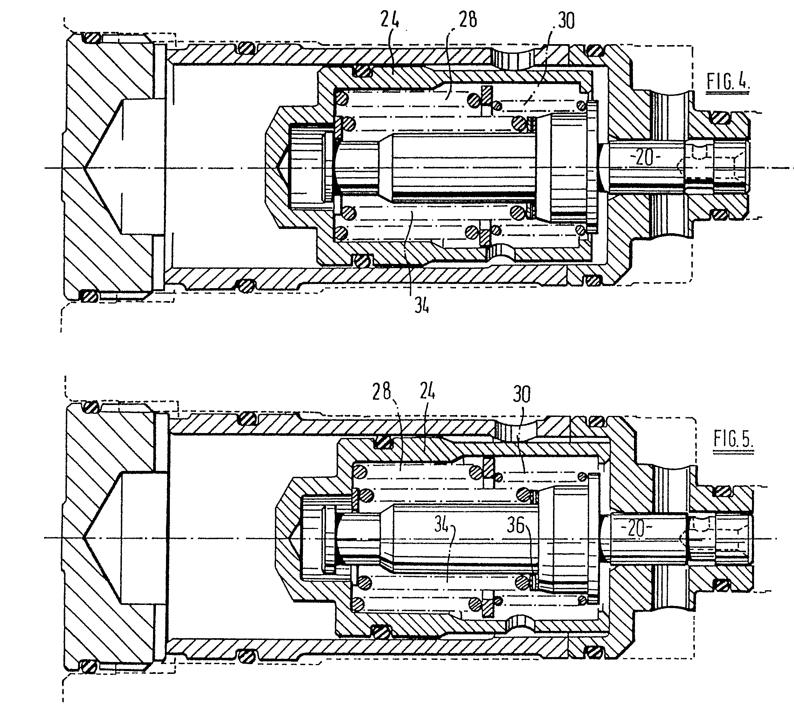

Oil continues to fill the space to the left of piston 24 moving the piston to the right. Because spring 30 is solid, the ring 27 moves away from the abutment 26 at the open end of piston 24, and spring 28 begins to become compressed. The rate of the spring 28 is relatively low, although slightly higher than spring 30, and hence the force which is urging the piston 20 to the right (and hence the oil pressure within passage 15) also increases at a low rate. The amount of movement available to the piston 24 while compressing the spring 28, which is the difference between the conditions shown in Figures 3 and 4 of the drawings, is relatively great, hence providing a substantial period in which the pressure in passage 15 is at an intermediate pressure which only increases gradually.

As oil continues to fill the space to the left of piston 24, the circlip 33 eventually contacts abutment 29 as shown in Figure 4. The main spring 34 is now compressed. This continues until the open end of piston 24 abuts the part 11 of the valve body, as illustrated in Figure 5. The relief valve piston 20 now determines the maximum pressure in passage 15, as set by the strength of spring 34 which may be adjusted by the use of appropriate shims 36.

As the pressure in passage 15 has been rising during the successive compression of the springs as described above, the cone clutch of the overdrive unit has been moving from its "overdrive disengaged" position to its "overdrive engaged" position. The period of relatively gradual increase in pressure in the system during the compression of spring 28 gives a desired smoothness of shift as the overdrive actually engages. All the time the solenoid valve remains in its open condition to admit oil from passage 15 to the left of piston 24, the pressure in the passage 15 remains determined by the main spring 34 and its shims, and the overdrive unit remains firmly engaged.

When the overdrive unit is to be disengaged, the solenoid valve is de-activated so that it closes. Oil is allowed to leak away from the space to the left of piston 24, also by way of the control orifice, to the oil reservoir of the overdrive unit, and hence the piston 24 moves to the left and the springs 28, 30, 34 become uncompressed in the reverse order to that in which they became compressed. Hence the pressure in passage 15 decreases with a similar characteristic to that with which it increased, including a relatively long period during which the spring 28 relaxes and in which the pressure decays only gradually. Hence a desirably smooth shift from the "overdrive engaged" to the "overdrive disengaged" condition is obtained.  It will of course be appreciated that although we refer to the compression and relaxation of spring 28 taking a relatively long time, the whole operation of the valve occurs so rapidly that to the user there is no or virtually no detectable lag between operation of the switch controlling the solenoid valve and engagement or disengagement of the overdrive unit.

CLAIMS

1.   A valve for controlling release of fluid from a passage (15) to determine the pressure of fluid therein, comprising a valve body (10,11) a valve member (20) moveable within said body (10,11) to obstruct communication between said passage (15) and an outlet passage (22), a piston (24) movable within said body (10,11) between a first position and a second position therein under the influence of fluid under pressure introduced into said body (10,11), and first spring means (28) operative between said piston (24) and said valve member (20), said first spring means (28) becoming loaded during movement of said piston (24) from said first position to said second position thereof and having a characteristic causing a relatively small increase in load on said valve member (20) during said piston movement.

2.   A valve according to Claim 1 further characterised by second spring means (34) operative between said piston (24) and said valve member (20) when said piston (24) is in said second position, to determine a higher limiting pressure of fluid in said passage (15).

3.   A valve according to Claim 2 further characterised in that said second spring means (34) is disposed between a surface (35) on said valve member (20) and an abutment (33), said abutment (33) being contacted by said piston (24) when said piston (24) is at or closely approaches its second position.

4.   A valve according to Claim 2 or Claim 3 further characterised by third spring means (30) operative between said piston (24) and said valve member (20) when said piston (24) is in its first position, to establish a residual pressure of fluid in said passage (15).

5. A valve according to Claim 4 wherein said third spring means (30) and first spring means (28) engage opposite sides of a member (27) movable relative to said piston (24), said member (27) engaging an abutment (26) of said piston (24) when the latter is in its first position, said first spring means (28) exerting a greater force than said third spring means (30) so that said member (27) remains in contact with said abutment (26) during movement of said piston (24) from its first to its second position, until said third spring means (30) is fully loaded whereupon said first spring means (28) commences to become loaded.

6. An overdrive unit comprising a clutch member, fluid pressure operated piston and cylinder means (5) for moving said clutch member to engage or disengage the overdrive unit, a pump (2) for delivering fluid under pressure to said piston and cylinder means (5), and a valve (7) for controlling release of fluid from said piston and cylinder means (5) and thus the operation thereof, characterised in that said valve (7) is as claimed in any one of the preceding Claims, said passage (15) communicating the said piston and cylinder means (5).

FIG.1.

FIG. 2.

FIG. 3

1/2

0085532

FIG.4.

FIG.5.

**EUROPEAN SEARCH REPORT**

| | DOCUMENTS CONSIDERED TO BE RELEVANT | | EP 83300383.3 |

| Category | Citation of document with indication, where appropriate, of relevant passages | Relevant to claim | CLASSIFICATION OF THE APPLICATION (Int. Cl. ³) |
|---|---|---|---|
| A | DE - A1 - 2 526 972 (VEB AUTOMOBIL-WERK EISENACH)<br><br>* Pages 1,2; claims 1,2; fig. 1 *<br><br>-- | 1 | F 16 K 17/04<br>B 60 K 41/04<br>F 16 H  5/18 |
| A | GB - A - 881 509 (CLARK EQUIPMENT COMPANY)<br><br>* Fig. 2 *<br><br>-- | 1 | |
| A | DE - A - 2 404 394 (K.K. KOMATSU SEISAKUSHO)<br><br>* Claims 1-3; fig. 1 *<br><br>-- | 1 | |
| A | GB - A - 1 234 388 (AUTO TRANS-MISSIONS LMD)<br><br>* Totality *<br><br>-- | 1 | **TECHNICAL FIELDS SEARCHED (Int. Cl ³)** |
| A | DE - B - 1 680 596 (FORD MOTOR CO.)<br><br>* Totality *<br><br>-- | 1 | F 16 K 17/00<br>B 60 K 17/00<br>B 60 K 41/00<br>F 16 H  5/00<br>G 05 D 16/00 |
| A | GB - A - 1 601 998 (MASSEY-FERGUSON SERVICES N.V.)<br><br>* Fig. 1,2 *<br><br>---- | 1 | |

The present search report has been drawn up for all claims

| Place of search | Date of completion of the search | Examiner |
|---|---|---|
| VIENNA | 13-05-1983 | ROUSSARIAN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82